(19) Europäisches Patentamt
European Patent Office
Office européen des brevets

(11) **EP 3 334 224 B1**

(12) **EUROPEAN PATENT SPECIFICATION**

(45) Date of publication and mention
of the grant of the patent:
**25.09.2019 Bulletin 2019/39**

(51) Int Cl.:
***H04W 56/00*** *(2009.01)*    ***H04W 72/04*** *(2009.01)*

(21) Application number: **16206439.8**

(22) Date of filing: **22.12.2016**

(54) **SYSTEM OF COORDINATING MULTI-CELLS AND METHOD THEREOF**

SYSTEM ZUM KOORDINIEREN VON MULTI-ZELLEN UND VERFAHREN DAFÜR

SYSTÈME DE COORDINATION DE MULTIPLES CELLULES ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2016 TW 105140409**

(43) Date of publication of application:
**13.06.2018 Bulletin 2018/24**

(73) Proprietor: **Industrial Technology Research Institute**
**Chutung, Hsinchu 31040 (TW)**

(72) Inventors:
• **HSU, Jen-Yuan**
**31040 Hsinchu (TW)**
• **HSIEH, Dung-Rung**
**Hsinchu City 300 (TW)**
• **CHEN, Jia-Ming**
**31040 Hsinchu (TW)**
• **LIN, Ming-Che**
**31040 Hsinchu (TW)**
• **CHEN, Chia-Pin**
**31040 Hsinchu (TW)**

(74) Representative: **Gill Jennings & Every LLP**
**The Broadgate Tower**
**20 Primrose Street**
**London EC2A 2ES (GB)**

(56) References cited:
**WO-A1-2012/171093**    **WO-A1-2013/110226**
**WO-A2-2014/018333**

**Description**

BACKGROUND

1. Technical Field

The present disclosure relates to systems of coordinating multi-cells and methods thereof, and, more particularly, to a system and a method of calibrating carrier frequency offsets among base stations.

2. Description of Related Art

Multi-antenna systems have been verified in theory and practice to be able to increase spectrum efficiency by precoding and/or beamforming techniques, such that multiple users can access radio resource simultaneously.
Recent researches have pointed out that if the number of antennas equipped on a base station is greater than four times of the number of users, the spectrum efficiency can increase linearly with the number of users; this is called Massive Antenna Theory. In general, when the number of antennas on a base station is more than 64, it can be called a massive-antenna system.
However, due to physical limitations, it is difficult for a typical base station to equip massive-antennas. Someone proposed to coordinate a plurality of base stations to jointly transmit data to users, called a Multi-Cell Coordination (MCC) system, to take advantages of multiple-antennas, like a massive antenna system.
In an MCC system, all base stations are controlled by a single coordination server, which can select the best transmission mode depending on a user's situation. However, different to the massive-antenna system, for the MCC system, the clock source of each base station is operated independently, which means there are Carrier Frequency Offsets (CFOs) between base stations.
In addition, other adverse effects, including sampling clock offset (SCO) caused by CFO, timing offset caused by propagation delay, opposite linear phases in downlink and uplink channels caused by CFO between a base station and a user, and time-varying effect of RF response will degrade the performance of channel estimation. Hence, after precoding,
**[0007]** Inter-Cell Interference (ICI) and Inter-User Interference (IUI) will be generated causing the reduction of system capacity. In summary, an MCC system cannot be realized if aforementioned issues are not solved.
WO-A-2013/110226 describes techniques for synchronizing frequency among a cluster of coordinated transmission points cooperating in a coherent joint transmission. In some embodiments, one transmission point is set as a reference transmission point for a group of coordinated transmission points. Each of one or more other transmission points in the group receives a specified downlink reference signal from the reference transmission point, measures its frequency offset relative to the reference point, and compensates the frequency offset in baseband processing or by a radio adjustment. Which transmission point acts as the reference transmission point is statically defined, in some embodiments, or dynamically configured, in others. Likewise, which time-frequency resources are used for the reference signal may be statically defined or dynamically configured. In some embodiments, information identifying the reference transmission point and/or specifying the radio resource locations and durations of the reference signal is distributed to the synchronizing transmission points.

SUMMARY

The present disclosure provides a method of coordinating multi-cells, the method comprising:

transmitting, by a reference user equipment (UE), first reference signals to a plurality of evolved NodeBs (eNBs) via uplink channels of the plurality of eNBs;
transmitting, by the eNBs, a plurality of uplink channel information estimated according to the first reference signals to the server;
performing uplink channel estimations for the eNBs according to the plurality of uplink channel information, and estimating carrier frequency offsets among the plurality of eNBs based on the uplink channel estimations for the eNBs at different time;
transmitting second reference signals from the plurality of eNBs (2) to the reference UE;
transmitting, by the reference UE, a plurality of downlink channel information estimated according to the second reference signals to the server; and
performing, by the server, a time-varying channel calibration to the plurality of eNBs, wherein the time-varying channel calibration is calculated from a ratio of the plurality of uplink channel compensated by the carrier frequency offsets and the plurality of downlink channel information compensated by the carrier frequency offsets.

The present disclosure further provides a system of coordinating multi-cells comprising a server:

a plurality of evolved NodeBs (eNBs) configured for exchanging data with the server; and
a reference user equipment (UE) configured for exchanging data with the server and connected with the plurality of eNBs through wireless transmission,
wherein the reference UE transmits first reference signals to the plurality of eNBs via uplink channels of the plurality of eNBs, the eNBs transmit a plurality of uplink channel information estimated according to the first reference signals to the server, the plurality of eNBs transmit second reference signals to the reference UE, the reference UE transmits a plurality of downlink channel information estimated according to the second reference signals to the server, uplink channel estimations for the eNBs are performed according to the plurality of uplink channel information, carrier frequency offsets among the plurality of eNBs are estimated based on the uplink channel estimations for the eNBs at different time, and the server performs a time-varying channel calibration to the plurality of eNBs, wherein the time-varying channel calibration is calculated based on a ratio of the plurality of uplink channel compensated by the carrier frequency offsets and the plurality of downlink channel information compensated by the carrier frequency offsets.

With the method or system of the present invention, synchronization among base stations, time-varying effect of RF response, and the acquiring of downlink channel state information in the system for coordinating multi-cells can be resolved. The present invention provides the addition of a reference UE in the system for coordinating multi-cells, so that a carrier frequency offset among eNBs can be estimated and compensated based on the uplink signals, thus addressing the issue of synchronization between eNBs. The reference UE also tracks the time-varying effect of RF response in real time based on the received downlink signals and performs channel calibration to obtain downlink channel state information, such that the system for coordinate multi-cells is able to perform precoding normally and achieve performance that is almost as good as that is achieved by a massive-antenna system.

BRIEF DESCRIPTION OF DRAWINGS

FIG. 1 is a schematic diagram illustrating a system of coordinating multi-cells in accordance with the present disclosure;
FIG. 2 is a schematic diagram illustrating the present disclosure realizing inter-eNB CFO estimation;
FIGs. 3A and 3B are flowcharts illustrating multi-cell coordination and channel calibration in accordance with the present disclosure;
FIGs. 4 to 6 are schematic diagrams illustrating the allocations of a reference signal in frames in accordance with the present disclosure;
FIG. 7 is a graph showing simulation of estimation performance for CFO among eNBs in accordance with the present disclosure;
FIG. 8 is a schematic diagram depicting a system model of an eNB antenna and a reference user equipment antenna in accordance with the present disclosure;
FIG. 9 is a graph illustrating a cumulative distribution function of inter-cell interference between eNBs; and
FIG. 10 is a schematic diagram of the present disclosure applied to a Wi-Fi system.

DETAILED DESCRIPTION

The present disclosure is described by the following specific embodiments. Those with ordinary skills in the arts can readily understand other advantages and functions of the present disclosure after reading the disclosure of this specification. The present disclosure may also be practiced or applied with other different implementations. Based on different contexts and applications, the various details in this specification can be modified and changed without departing from the spirit of the present disclosure.

Unless stated otherwise, articles "a" or "the" used preceding an entity throughout the specifications and the claims may be used to refer to a plurality of entities.

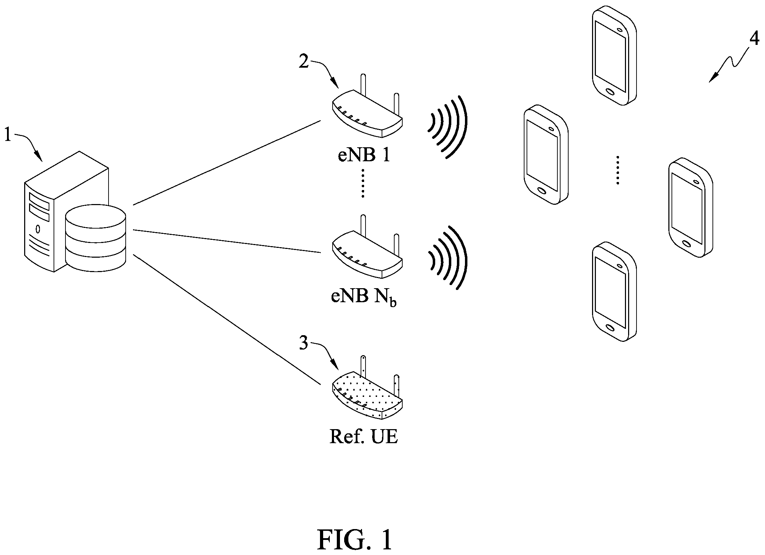

As shown in FIG. 1, a multi cell coordination (MCC) system and a method thereof in accordance with the present disclosure include a server such as a coordination server 1, a plurality of Evolved NodeBs (eNBs) 2 connected with the coordination server 1 for transmitting data among a specific or non-specific number of user equipment (UE) 4, and a reference UE 3 connected with the coordination server 1 and wirelessly connected with the plurality of eNBs, wherein the eNBs 2 and the reference UE 3 are connected with the server in wired ways. The eNBs 2 and the reference UE 3 employ Global Positioning System (GPS) signals for time synchronization. Each of the eNBs 2, the reference UE 3 and the UE 4 has its own independent clock source. In an embodiment, each of the eNBs 2 is equipped with $N_t$ antennas, and each of the reference UE 3 and the UE 4 is equipped with a single antenna.

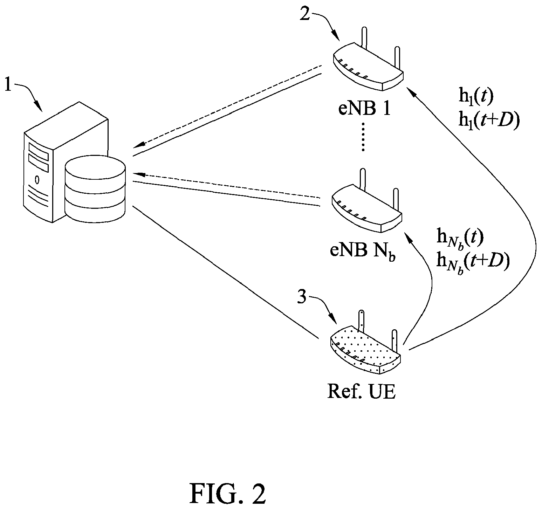

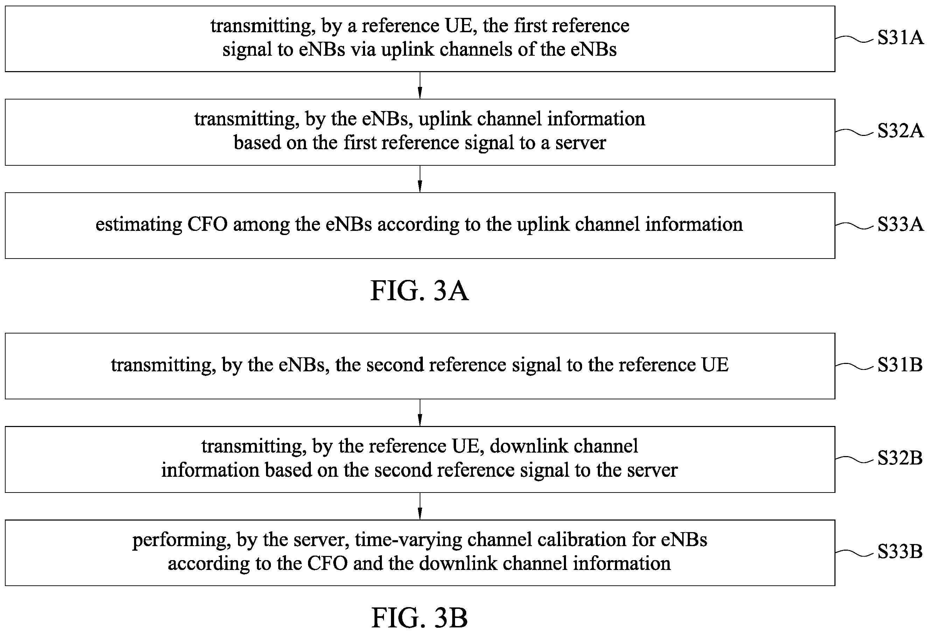

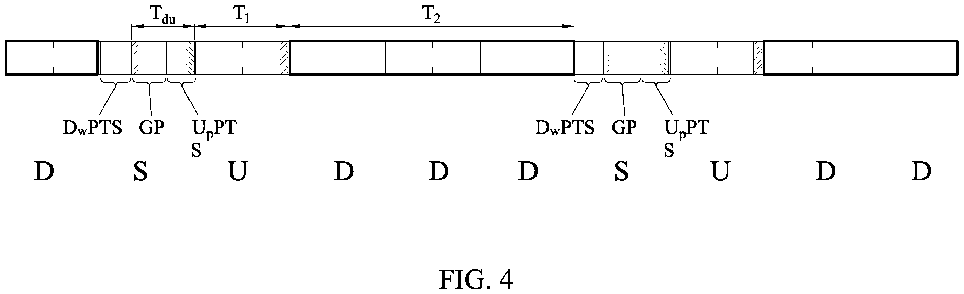

FIG. 3A is a flow chart of the method according to the disclosure. Please also refer to FIG. 2, which is a schematic diagram of inter-eNB CFO estimation. In step S31A, the reference UE 3 of the MCC system transmits the first reference signal to the plurality of eNBs 2 via uplink channels of the plurality of eNBs 2. In step S32A, the plurality of eNB 2 transmit the first reference signal or the uplink channel information converted based on the first reference signal to the coordination server 1. In step S33A, the coordination server 1 estimates CFOs according to the first reference signal or the plurality of uplink channel information. In an embodiment, the first reference signal can be transmitted in an uplink pilot time slot (UpPTS) of an uplink channel, or in an uplink subframe in an uplink channel, which is adjacent to a next downlink channel, as shown in FIG. 4.

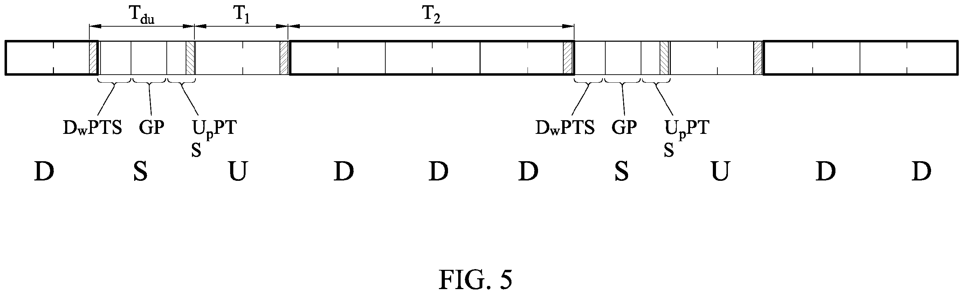

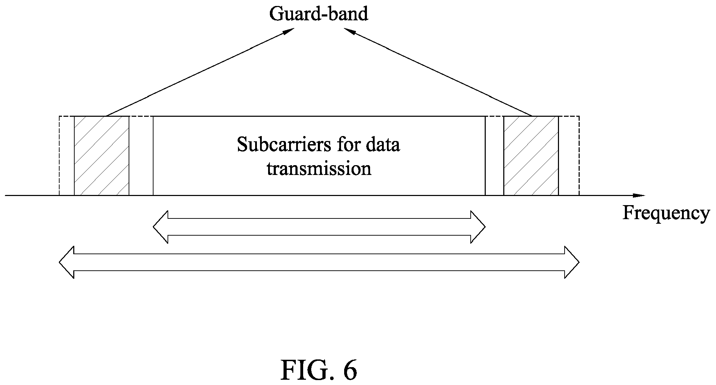

As shown in FIG. 3B, after the coordination server 1 estimates and obtains the CFOs, in step S31B, the plurality of eNBs 2 transmit the second reference signal to the reference UE 3. In step S32B, the reference UE transmits the second reference signal or the downlink channel information converted based on the second reference signal to the coordination server 1. In step S33B, the coordination server 1 performs time-varying channel calibration to the plurality of eNBs 2 according to the CFOs estimated according to the first reference signal and the second reference signal or the downlink channel information. In an embodiment, the second reference signal can be transmitted in a guard period (GP) of a special subframe between an uplink subframe and a downlink subframe, as shown in FIG. 4. In another embodiment, as shown in FIG. 5, the second reference signal can be transmitted in a downlink subframe of a downlink channel near a special subframe. In still another embodiment, as shown in FIG. 6, the second reference signal can be transmitted in guard-band subcarriers.

After obtaining data of the time varying channel calibration, the coordination server 1 calculates and transmits the precoders to the plurality of eNBs 2 for precoding.

Embodiments related to the CFO estimation, the time-varying channel calibration, and the precoding of the present disclosure are disclosed as follows.

As shown in FIG. 1, each of the eNBs is equipped with $N_t$ antennas, the reference UE transmits a reference signal $x_r(t)$, and the eNB $b$ receives a signal $y_b(t)$ which can be expressed as:

$$\mathbf{y}_b(t) = \mathbf{h}_b(t) \cdot \exp\left( j\left( \frac{-2\pi(\varepsilon_b - \eta_r)t}{T} + \theta_r - \phi_b \right) \right) x_r(t) + \mathbf{z}_b(t) \in \mathbf{C}^{N_t \times 1}$$

, wherein $\mathbf{h}_b(t)$ is a channel between the reference UE and eNB $b$, $T$ is the symbol time, $\theta_r$ is the initial phase when the reference UE transmits the signal, $\phi_b$ is the initial phase when the eNB $b$ receives the signal, $\varepsilon_b$ is the CFO of the eNB $b$, $\eta_r$ is the reference UE, and $\mathbf{z}_b(t)$ is a noise term. Since the reference signal $x_r(t)$ is known, the channel $\hat{\mathbf{h}}_b(t)$ estimated by the eNB can be represented as:

$$\hat{\mathbf{h}}_b(t) = \frac{1}{x_r(t)} \mathbf{y}_b(t) = \mathbf{h}_b(t) \cdot \exp\left( j\left( \frac{-2\pi(\varepsilon_b - \eta_r)t}{T} + \theta_r - \phi_b \right) \right) + \mathbf{z}'_b(t) \qquad (1)$$

A parameter $C_{1b}$ is defined as:

$$C_{1b}(t) = \hat{\mathbf{h}}_1^H(t)\hat{\mathbf{h}}_b(t) = \mathbf{h}_1^H(t)\mathbf{h}_b(t) \cdot e^{j\left( \frac{2\pi(\varepsilon_1 - \varepsilon_b)t}{T} + \phi_1 - \phi_b \right)} + z_{1b}^c(t) \qquad (2)$$

, wherein $C_{1b}$ is the inner product of the channel estimates between eNB 1 and eNB $b$ at time $t$. After time $D$, another $C_{1b}$ is obtained by:

$$C_{1b}(t+D) = \hat{\mathbf{h}}_1^H(t+D)\hat{\mathbf{h}}_b(t+D)$$
$$= \mathbf{h}_1^H(t+D)\mathbf{h}_b(t+D) \cdot e^{j\left( \frac{2\pi(\varepsilon_1 - \varepsilon_b)t}{T} + \frac{2\pi(\varepsilon_1 - \varepsilon_b)D}{T} + \phi_1 - \phi_b \right)} + z_{1b}^c(t+D) \qquad (3)$$

(3) is multiplied by the complex conjugated (2), where $v$ is the noise, and $R_{1b}$ is obtained as follows:

$$R_{1b}(t, t+D) = C_{1b}^*(t) C_{1b}(t+D)$$
$$= \mathbf{h}_1^H(t) \mathbf{h}_b(t) \mathbf{h}_1^H(t+D) \mathbf{h}_b(t+D) e^{j\frac{2\pi(\varepsilon_1 - \varepsilon_b)D}{T}} + v(t, t+D) \quad (3)$$

It is assumed that during the time $D$, the channel is almost static or varies slightly, and $R_{1b}$ can be approximated as follows:

$$R_{1b}(t, t+D) = \mathbf{h}_1^H(t) \mathbf{h}_b(t) \mathbf{h}_1^H(t+D) \mathbf{h}_b(t+D) e^{j\frac{2\pi(\varepsilon_1 - \varepsilon_b)D}{T}} + v(t, t+D)$$
$$\approx \left| \mathbf{h}_1^H(t) \mathbf{h}_b(t) \right|^2 e^{j\frac{2\pi(\varepsilon_1 - \varepsilon_b)D}{T}} + v(t, t+D) \quad (4)$$

From (4), it can be seen that the CFO between eNB 1 and eNB $b$, $\varepsilon_1 - \varepsilon_b$, is concealed in the phase of the $R_{1b}$, and the estimation of $\varepsilon_1 - \varepsilon_b$ can be given by:

$$\hat{\varepsilon} = \widehat{\varepsilon_1 - \varepsilon_b} = \frac{T}{2\pi D} angle\left(R_{1b}(t, t+D)\right) \quad (5)$$

After CFO estimation among the eNBs, the effect of CFO on the signal $\mathbf{s}_b^{CFO}(t)$ transmitted by the eNB can be compensated with a digital manner to obtain the signal $\mathbf{x}_b(t)$:

$$\mathbf{x}_b(t) = \mathbf{s}_b^{CFO}(t) e^{j\left(\frac{2\pi\hat{\varepsilon}_{1b}t}{T}\right)} = \mathbf{s}_b(t) e^{j\left(\frac{2\pi(\varepsilon_b - \eta_u)t}{T} + \theta_b + \phi_u\right)} e^{j\left(\frac{2\pi(\varepsilon_1 - \hat{\varepsilon}_b)t}{T}\right)}$$
$$= \mathbf{s}_b(t) e^{j\left(\frac{2\pi(\varepsilon_1 + (\varepsilon_b - \hat{\varepsilon}_b) - \eta_u)t}{T} + \theta_b + \phi_u\right)} \quad (6)$$

, wherein $\mathbf{s}_b(t)$ is the transmitted signal without CFO effect. The effect of CFO on the signal received by the eNB $\mathbf{r}_b^{CFO}(t)$ can be compensated in a digital way to have $\mathbf{y}_b(t)$:

$$\mathbf{y}_b(t) = \mathbf{r}_b^{CFO}(t) e^{j\left(\frac{-2\pi\hat{\varepsilon}_{1b}t}{T}\right)} = \mathbf{r}_b(t) e^{j\left(\frac{-2\pi(\varepsilon_b - \eta_u)t}{T} + \theta_u + \phi_b\right)} e^{j\left(\frac{-2\pi(\varepsilon_1 - \hat{\varepsilon}_b)t}{T}\right)}$$
$$= \mathbf{r}_b(t) e^{j\left(\frac{-2\pi(\varepsilon_1 + (\varepsilon_b - \hat{\varepsilon}_b) - \eta_u)t}{T} + \theta_u + \phi_b\right)} \quad (6\text{-}1)$$

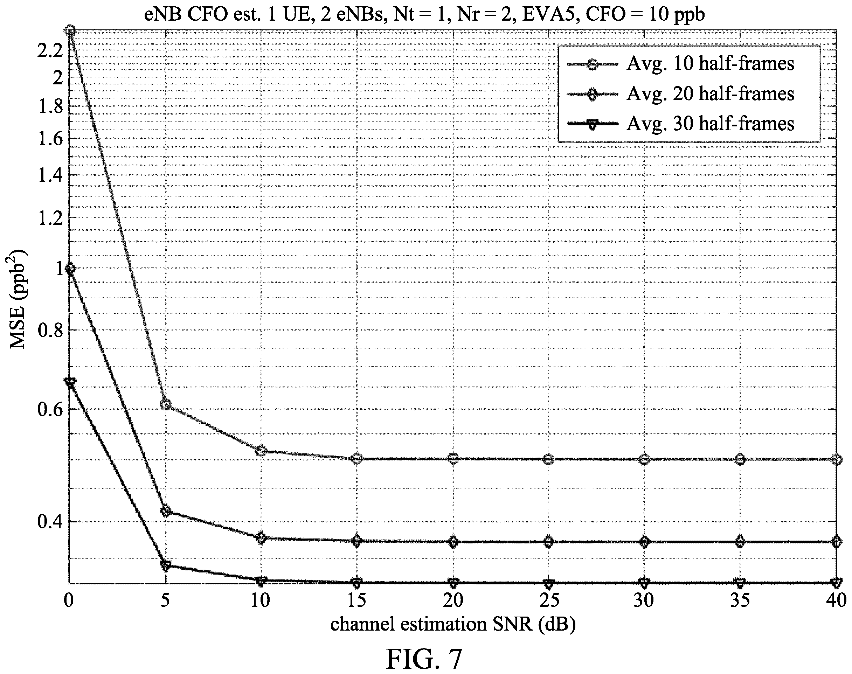

, wherein $\mathbf{r}_b(t)$ is a received signal without CFO effect. From equations (6) and (6-1), it can be seen that if there is no estimation error, the signals transmitted and received by all eNBs will only be related to the CFO between eNB 1 and UE $u$, and the performance thereof is at least equivalent to that of a massive-antenna system. As shown in FIG. 7, which is a graph showing simulation of estimation performance of CFO among eNBs, it is known from the simulation results of inter-eNB estimation that when the channel estimation Signal-to-Noise (SNR) is high enough (SNR > 15 dB), only 10 CFO estimations are required to estimate a Mean Squared Error (MSE) that reaches about 0.7 ppb regardless of whether it is utilized in the channel of 10 half-frame, 20 half-frame, or 30 half-frame. Such efficacies indicate the estimation accuracy of the present disclosure. Moreover, it is not restricted that the CFO estimation of the present disclosure is operated under any specific time, the CFO estimation can be estimated in a periodic or aperiodic time, and then those CFO estimations in different time can be recorded and their average can be calculated.

The cannel calibration and tracking are described as follows. In an embodiment, a downlink channel is estimated according to the reference signal transmitted from the eNB to the reference UE, and an uplink channel is estimated according to the reference signal transmitted from the reference UE to eNBs. A calibration coefficient can be calculated after the uplink and the downlink channels are obtained. A UE downlink channel is estimated according to the calibration coefficient and the UE uplink channel. A precoder is generated according to the estimated UE downlink channels and is used for the downlink period later.

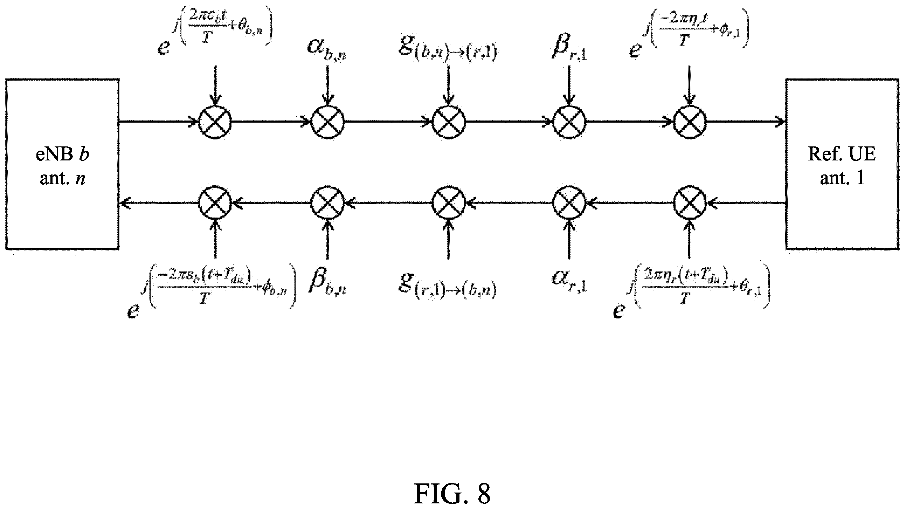

The frequency domain transmission model is shown in FIG. 8, wherein $\alpha$ represents the transmitting end filter response, $\beta$ is the receiving end filter channel, $g$ is an Over-The-Air channel, $\theta$ is the transmitting end initial phase, and $\phi$ is the receiving end initial phase. The eNB $b$ has CFO $\varepsilon_b$, and the reference UE has CFO $\eta_r$. $T_{du}$ represents the time difference between an uplink subframe and a downlink subframe, and subscript $(b,n) \to (r,1)$ represents that the signal transmitted from the $n^{th}$ antenna of the eNB $b$ to the first antenna of the reference UE.

Without the consideration of noise, a downlink channel estimated at the reference UE can be expressed as:

$$h_{(b,n)\to(r,1)}(t) = \beta_{r,1} \cdot g_{(b,n)\to(r,1)} \cdot \alpha_{b,n} \cdot e^{j\left(\frac{2\pi(\varepsilon_b - \eta_r)t}{T} + \theta_{b,n} + \phi_{r,1}\right)} \qquad (7)$$

At the eNB, the estimated uplink channel can be expressed as:

$$h_{(r,1)\to(b,n)}(t + T_{du}) = \beta_{b,n} \cdot g_{(r,1)\to(b,n)} \cdot \alpha_{r,1} \cdot e^{j\left(\frac{-2\pi(\varepsilon_b - \eta_r)(t + T_{du})}{T} + \theta_{r,1} + \phi_{b,n}\right)} \qquad (8)$$

Therefore, the calibration coefficient can be obtained by equations. (7) and (8):

$$\begin{aligned} c_{(b,n)\to(r,1)}(t + T_{du}) &= \frac{h_{(b,n)\to(r,1)}(t)}{h_{(r,1)\to(b,n)}(t + T_{du})} \\ &= \frac{\alpha_{b,n} \cdot \beta_{r,1}}{\beta_{b,n} \cdot \alpha_{r,1}} \cdot e^{j\left(\frac{4\pi(\varepsilon_b - \eta_r)t}{T} + \frac{2\pi(\varepsilon_b - \eta_r)T_{du}}{T} + \theta_{b,n} + \phi_{r,1} - \theta_{r,1} - \phi_{b,n}\right)} \end{aligned} \qquad (9)$$

From (9) and the uplink channel estimation of the UE $u$, the downlink channel of the UE $u$ can be obtained as follows:

$$\begin{aligned} \hat{h}_{(b,n)\to(u,1)}(t + T_{du}) &= c_{(b,n)\to(r,1)}(t + T_{du}) \cdot h_{(u,1)\to(b,n)}(t + T_{du}) \\ &= \frac{h_{(b,n)\to(u,1)}(t + T_{du})}{c_{(r,1)\to(u,1)}(t + T_{du})} e^{j\left(\frac{-2\pi(\varepsilon_b - \eta_u)T_{du}}{T}\right)} \end{aligned} \qquad (10)$$

A matrix formed by all of the downlink channels can be expressed as:

$$\hat{\mathbf{H}}\left(t+T_{du}\right) = \begin{bmatrix} c_{(r,1)\to(u,1)}^{-1}\left(t+T_{du}\right) & & \\ & \mathbf{O} & \\ & & c_{(r,1)\to(uN_u,1)}^{-1}\left(t+T_{du}\right) \end{bmatrix}$$

$$\cdot \begin{bmatrix} e^{j\left(\frac{-2\pi\left(\varepsilon_1-\eta_1\right)T_{du}}{T}\right)}\mathbf{h}_{b1\to u1}\left(t+T_{du}\right) & \mathbf{L} & e^{j\left(\frac{-2\pi\left(\varepsilon_{N_b}-\eta_1\right)T_{du}}{T}\right)}\mathbf{h}_{bN_b\to u1}\left(t+T_{du}\right) \\ \mathbf{M} & \mathbf{O} & \mathbf{M} \\ e^{j\left(\frac{-2\pi\left(\varepsilon_1-\eta_{N_u}\right)T_{du}}{T}\right)}\mathbf{h}_{b1\to uN_u}\left(t+T_{du}\right) & \mathbf{L} & e^{j\left(\frac{-2\pi\left(\varepsilon_{N_b}-\eta_{N_u}\right)T_{du}}{T}\right)}\mathbf{h}_{bN_b\to uN_u}\left(t+T_{du}\right) \end{bmatrix} \quad (11)$$

$$= \mathbf{C}_r^{-1}\left(t+T_{du}\right)\mathbf{H}^{CFO}\left(t+T_{du}\right)$$

According to equation (11), a precoder is generated as follows:

$$\mathbf{F}_{ZF}\left(t+T_{du}\right) = \hat{\mathbf{H}}^H\left(t+T_{du}\right)\left(\hat{\mathbf{H}}\left(t+T_{du}\right)\hat{\mathbf{H}}^H\left(t+T_{du}\right)\right)^{-1} \quad (12)$$

Precoding is performed at time $t + T_{du} + T_1$:

$$\mathbf{H}\left(t+T_{du}+T_1\right) = \begin{bmatrix} e^{j\left(\frac{2\pi\left(\varepsilon_1-\eta_1\right)T_1}{T}\right)}\mathbf{h}_{b1\to u1}\left(t+T_{du}\right) & \mathbf{L} & e^{j\left(\frac{2\pi\left(\varepsilon_{N_b}-\eta_1\right)T_1}{T}\right)}\mathbf{h}_{bN_b\to u1}\left(t+T_{du}\right) \\ \mathbf{M} & \mathbf{O} & \mathbf{M} \\ e^{j\left(\frac{2\pi\left(\varepsilon_1-\eta_{N_u}\right)T_1}{T}\right)}\mathbf{h}_{b1\to uN_u}\left(t+T_{du}\right) & \mathbf{L} & e^{j\left(\frac{2\pi\left(\varepsilon_{N_b}-\eta_{N_u}\right)T_1}{T}\right)}\mathbf{h}_{bN_b\to uN_u}\left(t+T_{du}\right) \end{bmatrix} \quad (13)$$

An equivalent channel matrix can then be obtained:

$$\mathbf{H}_{eq}\left(t+T_{du}+T_1\right) = \mathbf{H}\left(t+T_{du}+T_1\right)\cdot\mathbf{F}_{ZF}\left(t+T_{du}\right) \in \mathbf{C}^{N_u\times N_u} \quad (14)$$

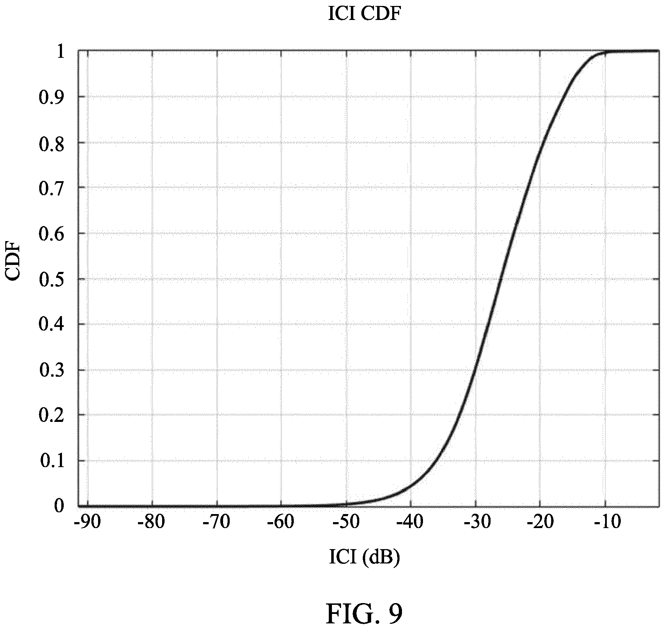

After the aforesaid calibration, as shown in FIG. 9, it can be clearly realized that the inter cell interference (ICI) among the eNBs is suppressed. The average ICI is suppressed lower than -25 dB, which meets the SNR requirement of 16 QAM transmission.

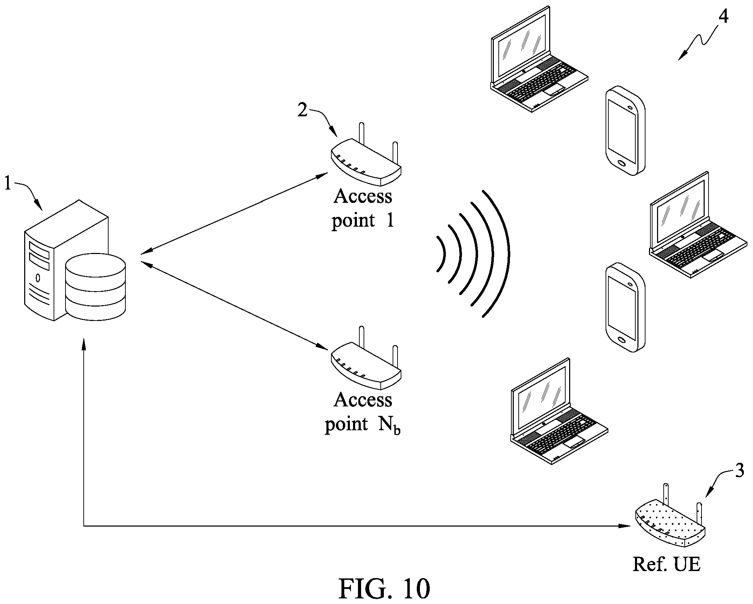

The concepts described above can be applied to systems using LTE protocol, systems using Wi-Fi protocol (e.g., where access points are used as base stations as shown in FIG. 10 (Access Point 1 to Access Point $N_b$)), or other systems using time-division multiplexing (TDD).

The above embodiments are just illustrating the principles of the present disclosure, and should not be used to limit the present disclosure in any way. The above embodiments can be modified by those familiar with related technologies if the principle of the disclosure is not violated. Hence, the scope of the disclosure should be the same as that of the claims listed in the following.

## Claims

1. A method of coordinating multi-cells comprising a server (1), the method comprising:

transmitting, by a reference user equipment (UE) (3), first reference signals to a plurality of evolved NodeBs (eNBs) (2) via uplink channels of the plurality of eNBs (2);
transmitting, by the eNBs (2), a plurality of uplink channel information estimated according to the first reference signals to the server (1);

performing uplink channel estimations for the eNBs (2) according to the plurality of uplink channel information, and estimating carrier frequency offsets among the plurality of eNBs (2) based on the uplink channel estimations for the eNBs (2) at different time;

transmitting second reference signals from the plurality of eNBs (2) to the reference UE (3);

transmitting, by the reference UE (3), a plurality of downlink channel information estimated according to the second reference signals to the server (1); and

performing, by the server (1), a time-varying channel calibration to the plurality of eNBs (2), wherein the time-varying channel calibration is calculated from a ratio of the plurality of uplink channel compensated by the carrier frequency offsets and the plurality of downlink channel information compensated by the carrier frequency offsets.

2. The method of claim 1, wherein the second reference signals are arranged to be transmitted in a special subframe between an uplink subframe and a downlink subframe.

3. The method of claim 2, wherein the second reference signals are arranged to be transmitted in a guard period in the special subframe.

4. The method of claim 1, wherein the second reference signals are arranged to be transmitted in a downlink subframe.

5. The method of claim 1, wherein the second reference signals are arranged to be transmitted in guard-band subcarriers.

6. The method of claim 1, wherein the first reference signals are arranged to be transmitted in an uplink time slot.

7. The method of claim 1, wherein the method is applicable to LTE protocol or Wi-Fi protocol.

8. A system of coordinating multi-cells, comprising a server (1):

a plurality of evolved NodeBs (eNBs) (2) configured for exchanging data with the server (1); and

a reference user equipment (UE) (3) configured for exchanging data with the server (1) and connected with the plurality of eNBs (2) through wireless transmission,

wherein the reference UE (3) transmits first reference signals to the plurality of eNBs (2) via uplink channels of the plurality of eNBs (2), the eNBs (2) transmit a plurality of uplink channel information estimated according to the first reference signals to the server (1), the plurality of eNBs (2) transmit second reference signals to the reference UE (3), the reference UE (3) transmits a plurality of downlink channel information estimated according to the second reference signals to the server (1), uplink channel estimations for the eNBs (2) are performed according to the plurality of uplink channel information, carrier frequency offsets among the plurality of eNBs (2) are estimated based on the uplink channel estimations for the eNBs (2) at different time, and the server (1) performs a time-varying channel calibration to the plurality of eNBs (2), wherein the time-varying channel calibration is calculated based on a ratio of the plurality of uplink channel compensated by the carrier frequency offsets and the plurality of downlink channel information compensated by the carrier frequency offsets.

9. The system of claim 8, wherein the plurality of eNBs (2) are arranged to transmit the second reference signals in a special subframe between an uplink subframe and a downlink subframe for transmission.

10. The system of claim 9, wherein the plurality of eNBs (2) are arranged to transmit the second reference signals in a guard period in the special subframe.

11. The system of claim 8, wherein the second reference signals are arranged to be transmitted in a downlink subframe.

12. The system of claim 8, wherein the plurality of eNBs (2) are arranged to transmit the second reference signals in guard-band subcarriers.

13. The system of claim 8, wherein the reference UE (3) is arranged to transmit the first reference signals in an uplink time slot.

14. The system of claim 8, wherein the system is applicable to an LTE protocol environment or a Wi-Fi protocol.

**Patentansprüche**

1. Ein Verfahren zum Koordinieren von Multi-Zellen, beinhaltend einen Server (1), das Verfahren beinhaltend:

Übertragen, durch ein Referenzbenutzergerät (User Equipment, UE) (3), von ersten Referenzsignalen an eine Vielzahl von evolvierten Knoten B (evolved NodeBs, eNBs) (2) über Aufwärtsstreckenkanäle der Vielzahl von eNBs (2);
Übertragen, durch die eNBs (2), einer Vielzahl von Aufwärtsstreckenkanalinformationen, geschätzt gemäß den ersten Referenzsignalen, an den Server (1);
Durchführen von Aufwärtsstreckenkanalschätzungen für die eNBs (2) gemäß der Vielzahl von Aufwärtsstreckenkanalinformationen und Schätzen von Trägerfrequenzoffsets unter der Vielzahl von eNBs (2) basierend auf den Aufwärtsstreckenkanalschätzungen für die eNBs (2) zu einem anderen Zeitpunkt;
Übertragen von zweiten Referenzsignalen von der Vielzahl von eNBs (2) an das Referenz-UE (3);
Übertragen, durch das Referenz-UE (3), einer Vielzahl von Abwärtsstreckenkanalinformationen, geschätzt gemäß den zweiten Referenzsignalen, an den Server (1); und
Durchführen, durch den Server (1), einer zeitlich variierenden Kanalkalibrierung an der Vielzahl von eNBs (2), wobei die zeitlich variierende Kanalkalibrierung aus einem Verhältnis der Vielzahl von Aufwärtsstreckenkanal, kompensiert durch die Trägerfrequenzoffsets, und der Vielzahl von Abwärtsstreckenkanalinformationen, kompensiert durch die Trägerfrequenzoffsets, berechnet wird.

2. Verfahren gemäß Anspruch 1, wobei die zweiten Referenzsignale angeordnet sind, um in einem speziellen Unterrahmen zwischen einem Aufwärtsstrecken-Unterrahmen und einem Abwärtsstrecken-Unterrahmen übertragen zu werden.

3. Verfahren gemäß Anspruch 2, wobei die zweiten Referenzsignale angeordnet sind, um in einer Schutzbehörde in dem speziellen Unterrahmen übertragen.

4. Verfahren gemäß Anspruch 1, wobei die zweiten Referenzsignale angeordnet sind, um in einem Abwärtsstrecken-Unterrahmen übertragen zu werden.

5. Verfahren gemäß Anspruch 1, wobei die zweiten Referenzsignale angeordnet sind, um in Schutzband-Unterträgern übertragen zu werden.

6. Verfahren gemäß Anspruch 1, wobei die Referenzsignale angeordnet sind, um in einem Aufwärtsstrecken-Zeitschlitz übertragen zu werden.

7. Verfahren gemäß Anspruch 1, wobei das Verfahren für ein LTE-Protokoll oder WiFi-Protokoll anwendbar ist.

8. Ein System zum Koordinieren von Multi-Zellen, beinhaltend einen Server (1):

eine Vielzahl von evolvierten Knoten B (eNBs) (2), die zum Austauschen von Daten mit dem Server (1) konfiguriert sind; und
ein Referenzbenutzergerät (UE) (3), das zum Austauschen von Daten mit dem Server (1) konfiguriert ist und über drahtlose Übertragung mit der Vielzahl von eNBs (2) verbunden ist,
wobei das Referenz-UE (3) erste Referenzsignale an die Vielzahl von eNBs (2) über Aufwärtsstreckenkanäle der Vielzahl von eNBs (2) überträgt, die eNBs (2) eine Vielzahl von Aufwärtsstreckenkanalinformationen, geschätzt gemäß den ersten Referenzsignalen, an den Server (1) übertragen, die Vielzahl von eNBs (2) zweite Referenzsignale an das Referenz-UE (3) übertragen, das Referenz-UE (3) eine Vielzahl von Abwärtsstreckenkanalinformationen, geschätzt gemäß den zweiten Referenzsignalen, an den Server (1) überträgt, Aufwärtsstreckenkanalschätzungen für die eNBs (2) gemäß der Vielzahl von Aufwärtsstreckenkanalinformationen durchgeführt werden, Trägerfrequenzoffsets unter der Vielzahl von eNBs (2) basierend auf den Aufwärtsstreckenkanalschätzungen für die eNBs (2) zu einem anderen geschätzt werden und der Server (1) eine zeitlich variierenden Kanalkalibrierung an der Vielzahl von eNBs (2) durchführt, wobei die zeitlich variierende Kanalkalibrierung aus einem Verhältnis der Vielzahl von Aufwärtsstreckenkanal, kompensiert durch die Trägerfrequenzoffsets, und der Vielzahl von Abwärtsstreckenkanalinformationen, kompensiert durch die Trägerfrequenzoffsets, berechnet wird.

9. System gemäß Anspruch 8, wobei die Vielzahl von eNBs (2) zum Übertragen der zweiten Referenzsignale in einem speziellen Unterrahmen zwischen einem Aufwärtsstrecken-Unterrahmen und einem Abwärtsstrecken-Unterrahmen zur Übertragung angeordnet sind.

10. System gemäß Anspruch 9, wobei die Vielzahl von eNBs (2) zum Übertragen der zweiten Referenzsignale in einer Schutzperiode in dem speziellen Unterrahmen angeordnet sind.

11. System gemäß Anspruch 8, wobei die zweiten Referenzsignale angeordnet sind, um in einem Abwärtsstrecken-Unterrahmen übertragen zu werden.

12. System gemäß Anspruch 8, wobei Vielzahl von eNBs (2) zum Übertragen der zweiten Referenzsignale in Schutzband-Unterträgern angeordnet sind.

13. System gemäß Anspruch 8, wobei das Referenz-UE (3) zum Übertragen der ersten Referenzsignale in einem Aufwärtsstrecken-Zeitschlitz angeordnet ist.

14. System gemäß Anspruch 8, wobei das System für eine LTE-Protokoll-Umgebung oder ein WiFi-Protokoll anwendbar ist.

**Revendications**

1. Procédé de coordination de multiples cellules comportant un serveur (1), le procédé comportant les étapes consistant à :

   transmettre, par un UE (user equipment - équipement utilisateur) de référence (3), des premiers signaux de référence à une pluralité de eNB (evolved NodeBs - noeuds B évolués) (2) par le biais de canaux de liaison montante de la pluralité de eNB (2) ;
   transmettre, par les eNB (2), une pluralité d'informations se rapportant aux canaux de liaison montante estimées en fonction des premiers signaux de référence au serveur (1) ;
   effectuer des estimations de canaux de liaison montante pour les eNB (2) en fonction de la pluralité d'informations se rapportant aux canaux de liaison montante, et estimer les décalages des fréquences porteuses parmi la pluralité de eNB (2) en se basant sur les estimations de canaux de liaison montante pour les eNB (2) à différents moments ;
   transmettre des deuxièmes signaux de référence en provenance de la pluralité de eNB (2) à l'UE de référence (3) ;
   transmettre, par l'UE de référence (3), une pluralité d'informations se rapportant aux canaux de liaison descendante estimées en fonction des deuxièmes signaux de référence au serveur (1) ; et
   effectuer, par le serveur (1), un calibrage des canaux variant dans le temps au niveau de la pluralité de eNB (2), dans lequel le calibrage des canaux variant dans le temps est calculé à partir d'un rapport entre la pluralité de canaux de liaison montante compensés par les décalages des fréquences porteuses et la pluralité d'informations se rapportant aux canaux de liaison descendante compensées par les décalages des fréquences porteuses.

2. Procédé selon la revendication 1, dans lequel les deuxièmes signaux de référence sont arrangés pour être transmis dans une sous-trame spéciale entre une sous-trame de liaison montante et une sous-trame de liaison descendante.

3. Procédé selon la revendication 2, dans lequel les deuxièmes signaux de référence sont arrangés pour être transmis dans une période de garde dans la sous-trame spéciale.

4. Procédé selon la revendication 1, dans lequel les deuxièmes signaux de référence sont arrangés pour être transmis dans une sous-trame de liaison descendante.

5. Procédé selon la revendication 1, dans lequel les deuxièmes signaux de référence sont arrangés pour être transmis dans des sous-porteuses de bande de garde.

6. Procédé selon la revendication 1, dans lequel les premiers signaux de référence sont arrangés pour être transmis dans un intervalle de temps de liaison montante.

**7.** Procédé selon la revendication 1, dans lequel le procédé est applicable dans un protocole LTE ou un protocole Wi-Fi.

**8.** Système de coordination de multiples cellules comportant un serveur (1) :

une pluralité de eNB (evolved NodeBs - noeuds B évolués) (2) configurés pour échanger des données avec le serveur (1) ; et

un UE (user equipment - équipement utilisateur) de référence (3) configuré pour échanger des données avec le serveur (1) et connecté à la pluralité de eNB (2) par le biais d'une transmission sans fil,

dans lequel l'UE de référence (3) transmet des premiers signaux de référence à la pluralité de eNB (2) par le biais de canaux de liaison montante de la pluralité de eNB (2), les eNB (2) transmettent une pluralité d'informations se rapportant aux canaux de liaison montante estimées en fonction des premiers signaux de référence au serveur (1), la pluralité de eNB (2) transmettent des deuxièmes signaux de référence à l'UE de référence (3), l'UE de référence (3) transmet une pluralité d'informations se rapportant aux canaux de liaison descendante estimées en fonction des deuxièmes signaux de référence au serveur (1), des estimations de canaux de liaison montante pour les eNB (2) sont effectuées en fonction de la pluralité d'informations se rapportant aux canaux de liaison montante, des décalages des fréquences porteuses parmi la pluralité de eNB (2) sont estimés en se basant sur les estimations de canaux de liaison montante pour les eNB (2) à différents moments, et le serveur (1) effectue un calibrage des canaux variant dans le temps au niveau de la pluralité de eNB (2), dans lequel le calibrage des canaux variant dans le temps est calculé en se basant sur un rapport entre la pluralité de canaux de liaison montante compensés par les décalages des fréquences porteuses et la pluralité d'informations se rapportant aux canaux de liaison descendante compensées par les décalages des fréquences porteuses.

**9.** Système selon la revendication 8, dans lequel la pluralité de eNB (2) sont arrangés pour transmettre les deuxièmes signaux de référence dans une sous-trame spéciale entre une sous-trame de liaison montante et une sous-trame de liaison descendante à des fins de transmission.

**10.** Système selon la revendication 9, dans lequel la pluralité de eNB (2) sont arrangés pour transmettre les deuxièmes signaux de référence dans une période de garde dans la sous-trame spéciale.

**11.** Système selon la revendication 8, dans lequel les deuxièmes signaux de référence sont arrangés pour être transmis dans une sous-trame de liaison descendante.

**12.** Système selon la revendication 8, dans lequel la pluralité de eNB (2) sont arrangés pour transmettre les deuxièmes signaux de référence dans des sous-porteuses de bande de garde.

**13.** Système selon la revendication 8, dans lequel l'UE de référence (3) est arrangé pour transmettre les premiers signaux de référence dans un intervalle de temps de liaison montante.

**14.** Système selon la revendication 8, dans lequel le système est applicable dans un environnement de protocole LTE ou un protocole Wi-Fi.

FIG. 1

FIG. 2

| transmitting, by a reference UE, the first reference signal to eNBs via uplink channels of the eNBs | S31A |

| transmitting, by the eNBs, uplink channel information based on the first reference signal to a server | S32A |

| estimating CFO among the eNBs according to the uplink channel information | S33A |

## FIG. 3A

| transmitting, by the eNBs, the second reference signal to the reference UE | S31B |

| transmitting, by the reference UE, downlink channel information based on the second reference signal to the server | S32B |

| performing, by the server, time-varying channel calibration for eNBs according to the CFO and the downlink channel information | S33B |

## FIG. 3B

FIG. 4

EP 3 334 224 B1

FIG. 5

EP 3 334 224 B1

Guard-band

Subcarriers for data transmission

Frequency

FIG. 6

FIG. 7

FIG. 8

FIG. 9

EP 3 334 224 B1

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013110226 A